# EUROPEAN PATENT APPLICATION

(11) **EP 4 458 484 A1**
(43) Date of publication of application: **06.11.2024**
(21) Application number: 23171049.2
(22) Date of filing: 02.05.2023
(51) Int. Cl.: B21D 7/024, B21D 7/12, B21D 7/14, B23Q 1/01, B23Q 1/76, B23Q 39/04

(54) **METHOD FOR BENDING AND MACHINING WORKPIECES ON A MACHINE TOOL, AND MACHINE TOOL FOR MACHINING AND BENDING WORKPIECES**

(71) Applicant: DMG MORI Bergamo S.r.l., 24030 Brembate di Sopra (BG) (IT)
(72) Inventor: PASSERINI, Mirko, 20083 Gaggiano (IT); MILESI, Luca, 24015 San Giovanni Bianco (IT); CAPELLI, Valeriano, 24030 Almenno San Bartolomeo (BG) (IT)
(74) Representative: MERH-IP Matias Erny Reichl Hoffmann Patentanwälte PartG mbB

(57) **Abstract**

Suggested is a machine tool and method for optimizing the performance of when manufacturing a workpiece requiring machining and bending operations. The machine tool comprises a machine frame with at least one linear movable tool carrier slide configured to carry a working unit, at least one work spindle provided to receive a workpiece and a working unit mounted onto the tool carrier slide. The working unit is configured to be rotated around a B-axis and the working unit is moved linearly in a plane perpendicular to the B-axis and wherein the working unit is configured to bend the workpiece received by the work spindle.

## Description

The present application relates to a machine tool, in particular a turning or a milling machine, with which it is possible to both, machine and bend workpieces.

### Background

Machine tools such as for example a turning or milling machines or lathes for machining a workpiece typically comprises a machine frame that is provided with at least one rotatably mounted work spindle for receiving workpieces and machining said workpieces using respective tool. Various configurations of working units can be implemented for machining of workpieces. For bending operations commonly specific bending machines are used. Accordingly, the bending machines are usually designed for bending operations and machine tools are designed for machining and these machines are commonly provided separately from each other. Therefore, for complex products which require both, bending and machining steps with several iterations of machining and bending operations, the production of a workpiece may be inefficient.

An examples of the prior art describing different machine tools can be found in e.g. , JP 2020 032528 A which describes a machine tool which comprises a machine frame having an upper tool carrier support part, a lower tool carrier support part, and a spindle carrier part arranged between the upper tool carrier support part and the lower tool carrier support part; a spindle carrier arranged on or at a height of the spindle carrier part of the machine frame, the spindle carrier supporting a main spindle which receives a work-piece and is horizontally arranged; and one or more tool carriers each of which is supported on a tool carrier assembly arranged in an either of the upper tool carrier support part and the lower tool carrier support part of the machine frame. A lower side surface of the lower tool carrier support part has an overhung inclination. The content of this application is herewith incorporated by reference in its entirety. A bending machine is described in e.g. JP 2005 161331A which describes a bending machine. The bending machine is provided with a bending die, a fixing tool to fix the workpiece to the bending die, a pressure die to press the work against the bending die, and a restraining tool.

Accordingly, the prior art focuses either on machining or on bending operations/process performed by a respective machine. However, in a production sequence requiring machining and bending operations, it is often required to relocate the workpiece from a machine tool to a bending machine for performing respective machining or bending operations (in particular using specific tube bending machines). This becomes even more complex if a sequence of several machining and bending operations on the workpiece are required. Consequently, manufacturing time and complexity are increased. In this regard, there is a need to further improve the production of workpieces which require different processing operations and particularly include a bending process, to increase efficiency and flexibility and to enable perform efficient bending and machining operations.

It is an object of the invention to improve a machine tool of the generic type so as to enable more efficient processing of one or more workpieces requiring different production operations to be performed by the same machine.

### Summary

The above-mentioned object is solved by the subject matter of the appended claims, specifically by the independent claims. Further preferred developments are described in the dependent claims.

It is provided a machine tool, in particular a numerically controlled turning, milling, turn-mill machine or working machine, comprising for example a machine frame having preferably at least one linear movable tool carrier slide configured to carry a working unit, at least a first work spindle provided to receive a workpiece, a first working unit mounted onto the tool carrier slide, wherein the first working unit is preferably configured to be rotatable around a B-axis and the first working unit is further preferably configured to be movable linearly in or along a X-Z plane (i.e. along the X-direction and/or along the Z-direction), said X-Z plane being perpendicular to the B-axis. Said B-axis may be arranged to allow a rotation of the working unit of the machine tool or e.g. tool turret or a milling head that enables the work unit or head to perform work from various angles on the side or end of a part held in a main or subspindle (or auxiliary spindle). Moreover, the first working unit may have a (preferably integrated) bending tool and for performing a bending operation the first working unit may be configured to bend the workpiece received by the first work spindle by rotating around the B-axis and/or moving linearly along the X-Z plane. Thus, a more efficient way of manufacturing workpieces by applying bending and machining operations using the same machine tool can be achieved. Suggested is therefore a machine tool and method for optimizing the performance of when manufacturing a workpiece requiring machining and bending operations.

The, X-Y-Z coordinate system that is referred to herein, is preferably defined such that the Z-axis is a horizontal axis parallel or substantially parallel to a spindle axis (main spindle axis and/or auxiliary spindle axis) of the first work spindle, the Y-axis is a horizontal axis perpendicular to the Z-axis and the X-axis is the vertical axis perpendicular to the Y-Z plane. Preferably the B-axis and Y-axis are parallel to each other.

In addition, the following terms "bending operation" or "bending procedure" refer to a process of bending one or more workpieces preferably by the working unit or the working units of the machine tool. Manufacturing of the workpiece refers to a sequence of all bending and/or machining operations to produce a final product which is the workpiece with a desired shape and geometrical parameters. Moreover, the working unit as referred to herein, may be a tool turret or a machining head

Moreover, a preferred bending operation is achieved by controlling a first working unit to rotate around the B axis and to move in the X-axis direction. Moreover, a second working unit which is arranged opposite to the first working unit is thereby configured to move (e.g. linearly) in the Z axis direction (and most preferrable also the first work spindle may be configured to move in the Z axis direction) for achieving said bending motion, which is necessary for providing the bending operation.

Alternatively, the machine tool may also be configured to rotate a first working unit around a B-axis and to move (e.g. linearly) a second working unit and/or the first working spindle in the Z-direction and preferably also in the X direction for achieving said bending motion, which is necessary for providing the bending operation.

Furthermore, the machine tool may be configured for dual operation and therefore to perform bending and machining of at least one workpiece of the first work spindle at least successively and preferably in parallel. Parallel operation may include bending and machining the same workpiece at the same time. Moreover, with the machine tool according to the invention machining one workpiece and bending the other workpiece may also be allowed in order to achieve a parallel operation, i.e. at the same time. Unclamping the workpiece for machining after bending operation is therefore not necessary. The configuration allowing multi operation without unclamping the workpiece may also be referred to as dual operation in the clamped state of the workpiece. This feature enables more efficient manufacturing of the workpiece and also reduces the time required for manufacturing of the final workpiece.

Furthermore, the machine tool may have a bending tool which includes at least a pressure die mounted on (or integrated into) the first working unit and wherein preferably the pressure die is mounted at a tool reception portion of the first working unit. The pressure die may be configured to move with the workpiece (which may be a tube or tubular workpiece) and may determine the point of bend. However, in a further development, the workpiece may also be a workpiece having no hollow space on the inside, namely a full-body or solid-body, such as for example a cylinder or block.

Furthermore, the machine tool may have a bending die which is connected to the machine frame and/or mounted on a second working unit of another movable tool carrier slide for additional support during bending of the workpiece, wherein the another movable tool carrier slide is configured to adjust the position of the bending die along its axis. Thus, the flexibility of the bending operation of the workpieces is further improved by using e.g. two working units which operate together to bend the workpiece. Preferably the bending die is a tool which allows workpieces to be bent around it and to define the resulting shape of the bent workpiece. Parameters of the bent workpiece and the bending machine may determine the type of bending die.

Moreover, the bending tools may be a tube bending die including detachable upper and lower bending rolls, an integrated clamp, and a pressure die. The bending rolls may have an elliptic curved shape. The integrated clamp may be arranged on sides of the upper and lower rolls. The press die may be formed into an elliptic curved shape.

In addition, each tool carrier slide may be configured to independently move the respective working unit (i.e. the working unit attached onto the respective tool carrier slide) in one or more linear directions at least in the X-Z plane.

It can be understood that the term "working unit" describes different types of working units as the first working unit, the second working unit, the third working unit etc. Each of the working units may be mounted/installed onto its own tool carrier slide which is a part of or attached to the machine frame. In addition, the invention is not limited to a configuration wherein only one working unit is mounted onto one tool carrier slide. Various modifications can be implemented based on the purpose of the machine tool, e.g., several working units can be mounted onto one tool carrier slide to achieve more compact structure of the machine tool and save space or one working unit can be mounted onto several tool carrier slides to enable more complex manufacturing operations by enabling higher level of control over the working unit. Thus, a more efficient way of manufacturing workpieces by applying bending and machining operations using the same machine tool can be achieved.

Preferably, the machine tool is configured to bend a workpiece, which is a pipe or tubular workpiece, with a bending die including one or a plurality of pipe-receiving profiles spaced along its axis and of different radii about this axis. As a result, time required for the same workpiece to be bent into a complex shape with different parts bended under different radii are reduced and more complex bending operations can be realized for the same workpiece with the same bending tool. Thus, a more efficient way of manufacturing workpieces by applying bending and machining operations using the same machine tool can be achieved.

Additionally, the machine tool can be modified to bend workpieces of different shapes, such as rectangular tubes, finned tubes, flat materials, solid rods. Thus, it is noted that structural and operational constraints of the working tool can be set by characteristics of the workpieces to be bent. Thus, a more efficient way of manufacturing workpieces by applying bending and machining operations using the same machine tool can be achieved.

Preferably, the bending operation of the first working unit is configured to generate a bending force and/or torque to bend the workpiece held in the first work spindle rotating the first working unit around the B-axis and, preferably at the same time, move (most preferrable linearly and continuously with the rotation movement) the first working unit at least along a Z-axis, the Z-axis being a horizontal axis preferably parallel to the spindle axis of the first work spindle. Thus, efficiency and speed of the bending operation is increased. The movement can be performed until the desired (i.e. final) bending shape of the workpiece is achieved. In a further preferable embodiment, a probe for geometrical measurement (and preferably in a further development, also for measuring a dynamic behavior of the workpiece during machining or bending operation) is contacting the workpiece during and/or after the bending operation to feedback the geometric parameter of the workpiece and thereby achieve a highly accurate result of the bending operation. The parameter output in dependence of the measurement of the probe can therefore be used as an input parameter for controlling the bending force and/or bending distance so that the working unit having the bending tool (and particularly the pressure die) can be controlled accordingly. Said probe is preferably mounted at one of the working units, and the machine tool includes a control system configured to adjust a bending angle by performing a bending operation in dependence of the measured parameter such as the inclination angle or a radius.

Preferably, the machine tool has the workpiece which is a pipe held in the clamping chuck of the first work spindle and the first working unit is configured to move the pressure die in a direction transverse to the pipe axis and a horizontal slide block or the bending die is slidably mounted (e.g. on the machine frame) for movement in a horizontal direction. As a result, the configuration of the machine tool is simplified without any noticeable loss in an efficiency of the bending operations. Thus, a more efficient way of manufacturing workpieces by applying bending and machining operations using the same machine tool can be achieved.

Moreover, the bending die may be mounted on the second working unit and a position of the bending die is adjusted by the second working unit linearly in X-Z direction. The second working unit can be further optimized to be linearly movable in X-Y-Z directions. Thus, the flexibility of the bending procedure is further improved and the bending tool can be easily adjusted to different parts of the workpiece. Thus, a more efficient way of manufacturing workpieces by applying bending and machining operations using the same machine tool can be achieved.

In a further development, the bending tool has a clamping portion which is configured to clamp the workpiece before bending of the workpiece and the clamping portion is fixed to the machine frame or mounted on the second working unit which is mounted onto another tool carrier slide. Various modifications of the clamped portion can preferably be introduced, e.g., a clamped portion having two adjacent parts wherein first part is mounted on the second working unit and second part is mounted on the machine frame.

Accordingly, the machine tool may be further configured such that a clamping portion of the bending tool is configured to clamp the workpiece before bending of the workpiece and the clamping portion may be fixed to the machine frame or may be mounted on the second working unit which is mounted onto another tool carrier slide.

Furthermore, preferably the first working unit is a tool turret (or turret unit) and preferably the pressure die is mounted at one of a plurality of tool receiving openings (or tool holder interface) of the tool turret. Moreover the first working unit may also be a working head and the pressure die may be mounted at the tool receiving opening of the working head for providing support to the pressure die during bending of the workpiece. Preferably the pressure die may be adjusted for gripping, advancing and/or rotating the workpiece to be bent. Thus, a more efficient way of manufacturing workpieces by applying bending and machining operations using the same machine tool can be achieved.

Furthermore, the machine tool preferably comprises a second work spindle, wherein the first work spindle is a counter spindle and the second work spindle is a main spindle of the machine tool. Optionally a third working unit is also provided, wherein the third working unit is configured to machine the workpiece received by the main spindle. The spindles can have fixed positions attached to the machine tool and/or the spindles can be attached to the tool carrier slides. This enables additional flexibility in arrangement of the spindles in relation to each other. As a result, the time for manufacturing of the workpiece can be further reduced and a more efficient way of manufacturing workpieces by applying bending and machining operations using the same machine tool can be achieved.

It is further noted that the spindle's position may be understood in a broad manner, e.g., the first work spindle can be the main spindle and the second work spindle can be the counter spindle. In addition, the working unit designed to bend the workpiece can be adjusted to any of said spindles. In some embodiments, only one working unit for bending the workpieces may be used to bend the workpieces, which are held by the first or second working spindle.

Preferably, the workpiece is clamped by a collet system of the at least one work spindle to fix the workpiece for the bending operation. Another advantage of integrating the bending tool in the machine tool is that the bending tool can be further simplified, since the workpiece is clamped by the spindle. Therefore, additional units for fixating the position of the workpiece before the bending operation are not required and the structure of the bending tool can be simplified. Thus, a more efficient way of manufacturing workpieces by applying bending and machining operations using the same machine tool can be achieved.

In an alternative embodiment, the machine tool can have a swiss-type configuration. For example, in a general swiss type configuration the workpiece can be moved along the z-axis while the tools can be maintained stationary, wherein the workpieces stock is held by a collet that is recessed behind a guide bushing.

Preferably, the machine tool comprises a probe for measurement of a (geometric) parameter of the bent workpiece, in particular for measuring an inclination angle. The probe may be provided, wherein preferably said probe is mounted at one of the working units, and wherein the machine tool includes a control system configured to adjust a bending angle by performing abending operation in dependence of the measured parameter such as the inclination angle or a radius. Thus, a more efficient way of manufacturing workpieces by applying bending and machining operations using the same machine tool can be achieved.

Preferably, the machine tool may comprise the bending die and/or pressure die which has at least two different pipe-receiving profiles for bending the same workpiece with different curvatures. Thus, more complex bending operations can be realized for the same workpiece.

A method for bending and machining a workpiece using the same machine tool comprising at least one of the following steps receiving the workpiece by at least one work spindle of the machine tool, machining the workpiece received by the work spindle by the working unit which is mounted onto the linear movable tool carrier slide, wherein machining includes at least one of drilling, working, grinding, or turning. Bending the workpiece is achieved by applying a bending pressure from the first working unit onto the workpiece. Thus, a more efficient way of manufacturing workpieces by applying bending and machining operations using the same machine tool can be achieved.

Preferably, the method for bending and machining a workpiece further comprises machining the workpiece received by a second work spindle by the second or third working unit, and transferring the workpiece from the second work spindle to the first work spindle before the bending of the workpiece. Thus, a more efficient way of manufacturing workpieces by applying bending and machining operations using the same machine tool can be achieved.

Preferably, the method for bending and machining a workpiece further comprises additional machining of the workpiece by the first working unit after bending of the workpiece. Thus, a more efficient way of manufacturing workpieces by applying bending and machining operations using the same machine tool can be achieved.

Preferably, the method for bending and machining a workpiece further comprises measuring one or more parameters, in particular an inclination or a radius, of the workpiece after bending the workpiece, and performing an additional bending operation on the workpiece based on the measured one or more parameters. As a result, more precise manufacturing can be achieved.

A tool turret of the machine tool may comprise a turret body having at least one connecting spot for replaceably mounting a tool holder to the tool turret and a transmission shaft (i.e. rotating and axially moving/sliding shaft) arranged at the connecting spot. The transmission shaft may be configured to transmit a drive torque from a spindle shaft to the mounted tool holder. Furthermore, a tool holder for a tool turret of a machine tool, in particular a lathe, may be configured to mount a tool at the tool turret for machining operations. In other words, there may be a tool turret of a machine tool, in particular a lathe, wherein the tool holder is configured to mount a tool at a tool holder interface of the tool turret for machining operations. This tool holder interface may also be configured to accept the described bending tools such as the bending die and/or the pressure die.

In a further development the tool turret may be a turret unit which may comprise a turret main body configured to be mounted to a carrier support of the machine tool (and or a tool carrier support or assembly), and a turret head mounted to the turret main body and including a turret disk. The turret disk may be configured to be rotatable, by a first driving means, around a disk axis which is an axis of rotation of the turret disk. Said axis may preferably be the axis of symmetry of the preferably symmetric turret disk. The turret unit may include a second driving means for pivoting the turret head around a turret axis. The second driving means is a motor such as a direct drive motor, having a rotor arranged radially outside of the stator and the second driving means may be integrated in the turret main body. By providing this specific structure a compact and cost-effective assembly with increased rigidity can be achieved. Moreover, by providing the turret unit, the unit can be placed at different carrier supports of the machine tool due to the symmetric design turret.

A second driving means may be integrated in the turret main body such that a cylindrical inner part (preferably most inner cylindrical part) of the turret main body forms the stator of the second driving means and/or a cylindrical outer part of the turret main body forms the rotor of the second driving means. Moreover, the turret main body may have a cylindrical shape wherein the ratio of the length of the cylinder to the outer diameter thereof may preferably be in the range of 0,5 to 1,7 and more preferably about 1,2 for which significant vibration reduction can been achieved, which may be relevant for an efficient bending operation.

The turret main body may include an inner cylinder part and an outer cylinder part wherein the outer cylinder part is provided to at least partially enclose the inner cylindrical part. The inner cylindrical part may include mounting surfaces for mounting the turret unit to the tool carrier assembly wherein on the inner surface of the outer cylinder part magnets of the rotor of the second driving means are attached. Thus, a more efficient way of manufacturing workpieces by applying bending and machining operations using the same machine tool can be achieved.

The second driving means may be configured to directly (gearless) drive the turret head to pivot around the turret axis. Moreover, the second driving means and a base of the turret head may provide a synchronized driving assembly.

The turret head may be mounted directly to the rotor of the second driving means. Moreover, the turret main body may have a symmetric structure so that the turret unit can be used for left and right sides of the lathe or machine tool. In other words, the turret main body may be symmetric in view of the longitudinal axis thereof.

The turret unit may be a tool turret, and the form of such a tool turret may implement a disk turret which, to enable each tool to be moved into an operating position, can be turned in a controlled manner about a turret axis extending parallel to the workpiece spindle axis, at least in a lathe without a B-axis or in a lathe with a B-axis in the starting position of the tool turret. The turret head can be rotated by at least 100 degrees, more preferably 110 degrees around the turret axis. Thus, a more efficient way of manufacturing workpieces by applying bending and machining operations using the same machine tool can be achieved.

Furthermore, a bending tool for bending a workpiece on a machine fool bending die and a pressure die is suggested. Both the pressure die and the bending die may have at least one guiding path for bending of a workpiece, in particular a pipe or tubular workpiece. The bending die may have at least two guiding paths with different radii for bending the same workpiece under different angles.

Moreover, the bending tool can be adapted wherein the bending die comprises profiles for receiving a rectangular-section or oval-section pipes oriented respectively parallel or perpendicular to its longer sides.

Preferably, the pressure die is configured as a follower-type pressure die, configured to travel along the workpiece duringthe bending operation to reduce drag on the workpiece at the point of bend.

Summarizing, the machine tool according to the invention provides a compact design of the machine tool which allows for more efficient operations as bending and machining of workpieces through the integration of the bending tool into the machine tool. Thus, a more efficient way of manufacturing workpieces by applying bending and machining operations using the same machine tool can be achieved.

### Brief description of the figures

Fig. 1: exemplary shows an arrangement of work spindles and working units according to an embodiment of the invention;
Fig. 2a and 2b: exemplarily show a schematic perspective view in X-Z plane of a machine tool with an arrangement of spindles and working units attached to the machine tool as shown in Fig. 1, before bending of the workpiece and after bending of the workpiece according to an embodiment;
Fig.3a and 3b: exemplarily show a schematic perspective view in X-Z plane of a machine tool with the arrangement of spindles and working units attached to the machine tool as shown in Fig. 1, before bending of the workpiece and after bending of the workpiece according to an embodiment;
Fig. 4a and 4b: exemplarily show a schematic perspective view in X-Z plane of a swiss type machine tool with the arrangement of spindles and working units before bending of the workpiece and after bending of the workpiece according another embodiment;
Fig. 5a and 5b: exemplarily show a schematic perspective view in X-Z plane of a machine tool with the arrangement of spindles and working units attached to the machine tool as shown in Fig. 1 before bending of the workpiece and after bending of the workpiece according yet another embodiment;
Fig. 6a: exemplarily shows a relative position of the bending tool according to any of the above cited embodiments.
Fig. 6b: exemplarily shows a structure of bending tool in X-Y plane perpendicular to the Z axis.
Fig. 6c: shows a side another view of the bending die, which is a multi-shape bending die
Fig. 6d: exemplarily shows a structure of a workpiece bent with the multi-shape bending die in different planes
Fig. 7: exemplary shows a relative probe position to the workpiece and measurement of related geometrical parameters performed by the probe.
Fig. 8: exemplary shows a step-by-step modification of a workpiece with different manufacturing operations

### Detailed description of preferred examples

In the following, examples of the present invention are described in detail with reference to exemplary figures. The features of the examples and embodiments may be combined in whole or in part and the present invention is not limited to the described examples and embodiments. In the figures, identical elements are provided with identical reference signs, so that a repeated description of the elements is omitted unless necessary.

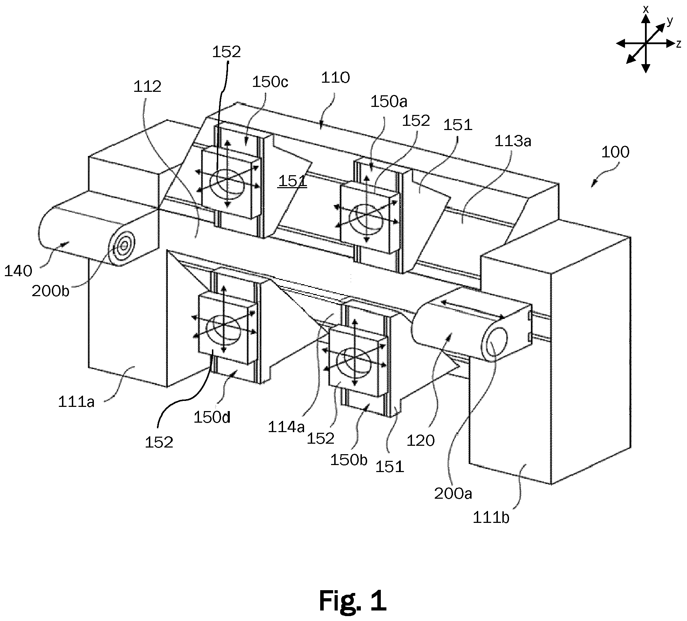

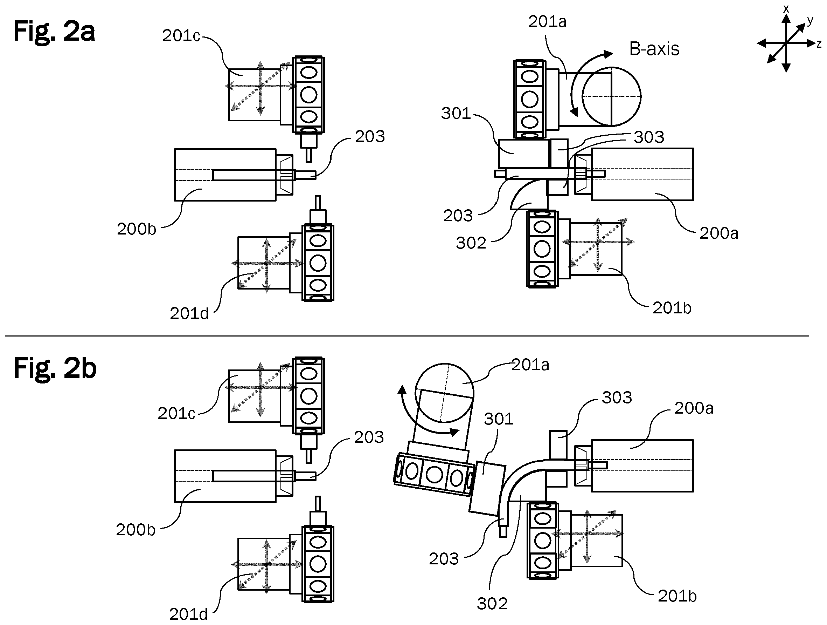

Fig. 1 exemplary shows an arrangement of work spindles and working units according to an exemplary embodiment of the invention. Specifically, a machine tool 100 includes a first work spindle 200a and a second work spindle 200b being arranged opposite to each other as well as a first working unit 201a (see figure 2) and a second working unit 201b (see figure 2). The first work spindle 200a depicted on the right side of Fig. 1 may be a counter spindle and the second work spindle 200b depicted on the left side of Fig. 1 may be a main spindle. However, it is also possible that the two work spindles 200a, 200b represent two independent work spindles, each provided to receive a workpiece to be machined or to be bent by one of the working units. The bold arrows near the depicted work spindles 200a, 200b and near the working units 201a, 201b indicate the movement direction of said elements so that said elements may be linearly moved throughout the entire machining area. The associated coordinate system is shown at the top of Fig. 1, wherein the Z-axis is a horizontal axis preferably parallel to the spindle axis of the first work spindle.

The first working tool 201a is disposed above the first spindle 200a and the second working tool is disposed below the first spindle 200a, as shown in e.g. figure 2a or 2b. The working units are mounted onto tool carrier slides 152.

Furthermore, the machine tool 100 with the arrangement of spindles and working units depicted in Fig. 1 includes a machine frame 110 supporting four tool carrier assemblies 150a - 150d. The respective directions along which each tool carrier assembly 150a - 150d can be linearly moved are the X-, Z-axis and, optionally also the Y-axis, directions which are indicated by doubled arrows in said figure. Moreover, at least one working unit, here the first working unit 201a (see figure 2a) is mounted at one of the tool carriers 150a -or150c which allow a rotation around a B-axis (not shown figure 1). This means that the respectively mounted working unit can be rotated about an Y-axis.

Furthermore, the first working unit 201a is mounted onto the (first) tool carrier assembly 150a and more particularly onto the tool carrier support slide 152, which are arranged on an upper tool carrier support portion 113 of the machine frame 110. Accordingly, the second working unit 201b is mounted onto a tool carrier assembly 150b and more particularly onto the tool carrier support slide 152, which are arranged on a lower tool carrier support portion 114 of the machine frame 110, wherein preferably a third and a fourth tool carrier assemblies 150c, 150d are provided which are arranged on the lower and upper tool carrier support portions 113, 114 to oppose each other and in a proximity of the second work spindle 200b.

The machine tool has a configuration with at least two spindles, however a presence of a second work spindle 200b is optional, since in the required operations for the invention, which include bending and machining of the workpiece, may also be realized by using only the first work spindle 200a depicted in Figure 1. Nevertheless, in the following examples the machine tool 100 has two spindles and four working units in order to further increase the production efficiency for multi-operation manufacturing of workpieces. However, a various modification of the structure of the machine tool can be implemented: a plurality of spindles can be implemented into the machine tool and a singule or a plurality of working units can be installed.

The machine frame 110 of the machine tool 100 depicted in the figure positioned on two machine stand portions 111a and 111b, and a carrier support portion of the machine frame 110 is formed in between and held by the machine stand portions 111a and 111b. The depicted machine frame 110 includes the upper tool carrier support portion 113 and a lower tool carrier support portion 114, both of which horizontally extending between the two machine stand portions 111a and 111b. The upper side surface of the upper tool carrier support portion 113 of the machine frame 110 is arranged at an inclined slope, and the lower side surface of the lower tool carrier support portion 114 of the machine frame 110 is arranged at an overhanging inclined slope.

For slidably supporting the tool carrier assemblies 150a, 150b on the upper side of the machine frame 110 in a machining area of the machine tool 100, the upper tool carrier support portion 113 of the machine frame 110 has horizontally extending guides 113a. Accordingly, for slidably supporting the tool carrier assemblies 150c, 150d on the lower side of the machine frame 110 in a machining area of the machine tool 100, the lower tool carrier support portion 114 of the machine frame 110 has horizontally extending guides 114a.

Furthermore, each tool carrier assembly 150a - 150d includes a carrier support slide 151 which is configured to be slidably mounted to the guides 113a or 114a of the upper and lower tool carrier support portions 113 or 114 of the machine frame 110. Accordingly, when mounted on top of the upper tool carrier support portion 113 on the guides 113a, the carrier support slide 151 is configured to be moved horizontally on and along the guides 113a in the Z-axis direction. On the other hand, when mounted in a hanging state at the overhanging lower tool carrier support portion 114 at the guides 114a, the carrier support slide 151 is configured to be moved horizontally along the guides 113a in the Z-axis direction.

On the front side of the carrier support slide 151 of the tool carrier assembly 150a - 150d, facing the machining area of the machine tool 100, a tool support slide 152 is slidably mounted to the carrier support slide 151. The tool carrier slide 152 is configured to be moved vertically on and along vertical guides arranged on a front face of the carrier support slide 151 in the X-axis direction. Furthermore, on the front side of the tool carrier slide 152 of the tool carrier assembly 150a - 150d, facing the machining area of the machine tool 100, a horizontally arranged tool carrier quill (not depicted) extending from the front side of the tool carrier slide 152 in a Y-axis direction into the machining area of the machine tool 100 may be provided, to mount a working unit (tool/machining unit 201a etc.) at the front-side end portion of the tool carrier quill. The tool carrier quill can be mounted to the tool carrier slide 152 so as to controllably move horizontally in a Y-axis towards the front of the machine tool 100. Furthermore, the tool carrier quill may be configured to further include a rotatably driven B-axis so as to control a rotational movement of the working unit mounted to the tool carrier assembly 150a - 150d around the horizontally arranged longitudinal axis of the tool carrier quill, i.e. about a rotational axis extending in the Y-axis direction.

In a further development the work spindles 200a, 200b and working units 201a, 201b may all be mounted to respective tool carrier assemblies 150a - 150d of the machine tool 100. The degree of freedom in terms of the linear and rotational movement of the work spindles 200a, 200b and working units 201a, 201b can thereby be further optimized. Thus, a more efficient way of manufacturing workpieces by applying bending and machining operations using the same machine tool can be achieved.

In such a development, for example, to implement the first work spindle 200b as main spindle, the tool carrier slide 152 of the tool carrier assembly 150a can be moved vertically downward in the X-axis direction on the vertical guides of the carrier support slide 151, e.g., until it reaches its lowest position. On the other hand, to implement the second work spindle 200a as counter spindle being arranged coaxially to the main spindle, the tool carrier slide 152 of the fourth tool carrier assembly 150d can be moved upward in the X-axis direction on the vertical guides of the carrier support slide 151, e.g., until it reaches its highest position. In this way, it is possible to arrange the main spindle and the counter spindle coaxially and opposite each other. Depending on the length of the vertical guides on the carrier support slides 151, the main and counter spindles may additionally be rotated about the respective B-axes of the first and fourth tool carrier assemblies 150a, 150d, to achieve the required position.

According to one embodiment, a schematic perspective view in X-Z plane of a machine tool with the arrangement of spindles and working units mounted onto the machine tool as shown in Figure 1 is shown in figures 2a and 2b. The working units are positioned at the movable tool carrier slides 152 of Figure 1.

The first working spindle 200a is designed to receive the workpiece 203, which is for example a tubular workpiece. A preferrable positioning of the working units are as follows: the first working unit 201a is positioned vertically above the first work spindle 200a along X-axis and can be linearly moved in X-Z plane by the tool carrier assembly and, in addition, the first working unit 201a can be rotated around B-axis in the connection point between the first working unit and the tool carrier assembly as demonstrated in Figure 2a.

As shown in figure 2a, the first working unit 201a is a tool turret. The tool turret has a turret body having at least one connecting spot for replaceably mounting a tool holder (or directly a tool) to the tool turret. The tool turret is designed as a disk turret which, to enable each tool to be moved into an operating position, can be turned in a controlled manner about a turret axis extending parallel to the workpiece spindle axis, at least in a lathe without a B-axis or in a lathe with a B-axis in the starting position of the tool turret. The turret head can be rotated by at least 100 degrees, more preferably 110 degrees around the turret axis. Preferably the other working units 201b to 201c are also such type of tool turrets so that they may be interchanged, as shown in figure 2a and 2b.

The second working unit 201b is positioned vertically below the first work spindle 200a, wherein the second working unit 201b is linearly movable, at least, in the Z-direction and more preferably in the X-Z plane.

The first and the second working units are used to bend the workpiece 203 received by the working spindle by a bending tool.

According to one embodiment, the bending tool includes a pressure die 301, a bending die 302 and a clamping portion 303 as shown in Figure 2a which is used to bend the workpiece 203, wherein different parts of the bending tool are arranged/mounted on different units of the machine tool.

Specifically, the pressure die 301 is mounted on the first working unit 201a, preferably at a tool reception portion the first working unit 201a. The bending die 302 is mounted on the second working unit 201b, or preferably on a tool reception portion of the second working unit 201b. In this particular example shown in Figure 2a, the first and second working units are tool turrets, which may hold a plurality of elements for machining the workpiece 203. Accordingly, a bending operation can be included directly in a sequence of machining steps of a manufacturing process on a machine tool, in particular a lathe.

An additional part of the bending tool is the clamping portion 303 which is designed to clamp and/or fix the workpiece 203 in addition to the spindle. The workpiece is clamped and/or fixed by the clamping portion during the bending operation. There are some efficient possibilities of attaching or mounting the clamping portion 303 to the machine tool. In particular, the clamping portion 303 of the bending tool can be fixed directly to the machine frame 110 or can be mounted on the second working unit 201b, for example in a tool receiving portion thereof (or connecting spot). Alternatively, one part of the clamping portion 303 (e.g. upper clamping portion) can be fixed to the machine frame 110 and another part of the clamping portion 303 (e.g. lower clamping portion) is fixed to one of the working units. In any of these modifications, the clamping portion 303 can fix the position of the workpiece 203. The clamping portion is located between the first work spindle 200a and the pressure die 301, the bending die 302.

The workpiece 203 received by the first work spindle 200a is fixed by the clamping portion 303 before and in particular during the bending operation. After the workpiece is securely fixed, the first working unit 201a is configured to generate a bending force or to apply torque via the bending die face of the pressure die which is in contact with the workpiece to therefore bend the fixed workpiece 203 held in the first work spindle 200a. Bending is achieved by rotating the first working unit 201a around the B-axis. Preferably, the first working unit 201a can additionally be moved linearly at least along Z-axis or in X-Z plane for enhancing the bending operation at the time of rotating the first working unit around B-axis.

The pressure die 301 is carried or mounted in a in a connecting spot (or tool receiving interface) of the disc of the tool turret 201a, wherein the tool turret is movable in order to advance the pressure die 301 into bending engagement with a length of the workpiece, in particular a metal tubing supported by the clamping portion 303 and received in the first working spindle 200a. The clamping portion has two parts which are arranged circumferentially of the clamped workpiece. The bending die 302 is carried in a connecting spot (or tool receiving interface) of the working unit 201b. Said bending die 302 preferably has a convexly curved, typically semi circularly shaped bending die face which cooperate with complementary die faces of the pressure die to define a channel of e.g. generally circular (or elliptical or rectangular) cross section having a diametric size closely matching the size of the workpiece (or tubular workpiece) being bent by the machine tool. The motion for bending the supported workpiece can be performed by the tool turret 201a in order to apply the necessary pressure onto the workpiece. For this matter the tool turret 201a may be controlled to move along the Z-axis direction and at the same time rotate around the B-axis in order to bend the end portion of the workpiece 203, as shown in figure 2b, downwardly, i.e. into the desired bending position. For this operation the bending die 302 may be static or can also be advancing along a line extending parallel to the Z-axis and pushes into the supported workpiece. This combination of bending die and pressure die cooperates to bend the workpiece through a selected angle, in accordance with the advancement stroke length of the pressure die and/or the movement of the bending die. During the bending operation the workpiece is pressed by the pressure die 301 of the first working unit 201a against the bending die 302, which works as a counter part for bending the workpiece 203 to a predetermined radius as demonstrated in Figure 2b.

After a first bending operation the further manufacturing operations can be performed on the workpiece 203. For example, the workpiece can be further bended in e.g. a different plane by unfixing the workpiece 203 of the clamping portion 303, rotating the workpiece 203 by the first work spindle 200a, fixing the workpiece 203 with the clamping portion 303 and performing another bending operation. Further, the bended part can also be machined by tools mounted at one of the working units.

As a result, the workpiece 203 is bended into a desired shape as demonstrated in Figure 2b.

Furthermore, the machine tool 100 may further comprise a second work spindle 200b (e.g. the main spindle), which is shown on the left side of the Figures 2a and 2b with the workpiece 203, wherein third and fourth working units 201c and 201d are configured to machine the workpiece 203 received by the main spindle. The spindles can have fixed positions attached to the machine frame or in an alternative embodiment the spindles can be attached to the tool carrier slides.

The third and fourth working units 201c and 201d are located vertically above and vertically below the second working spindle 200b similar to a position of the working units 201a and 201b to the first working spindle 200a. These additional working units can be implemented for machining the workpiece received by the second work spindle 200b before transporting the workpiece to the first work spindle 200a for further bending operations. Transport of the workpiece can be achieved, for example, by moving the main spindle together with the workpiece along the z-axis direction to the auxiliary spindle (first working spindle 200a) and inserting the workpiece into the opening of the auxiliary spindle such that the auxiliary spindle can clamp the workpiece and the main spindle can release the workpiece and move back to the initial position (which is shown in figure 2a).

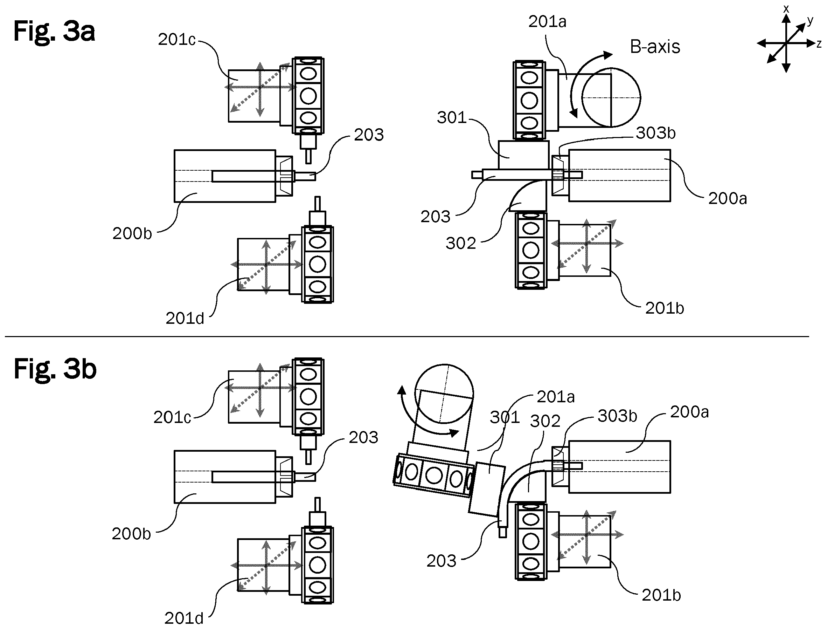

A further development is shown in Figures 3a and 3b. This development differs from the embodiment in figure 2a and 2b in view of the different bending tool. The bending tool according as shown in figures 3a and 3b does not require the clamping portion 303 since the clamping force of the auxiliary spindle (first work spindle 200a) is increased to achieve a tight clamping force and to fix the workpiece for the bending operation. In other words, the workpiece 203 is received by the first work spindle 200a, and the first work spindle 200a can be used to fix the workpiece instead of the clamping portion 303. In particular, the workpiece 203 can be fixed/clamped by a collet system of the work spindle, e.g., the first work spindle 200a in Figure 3a and 3b.

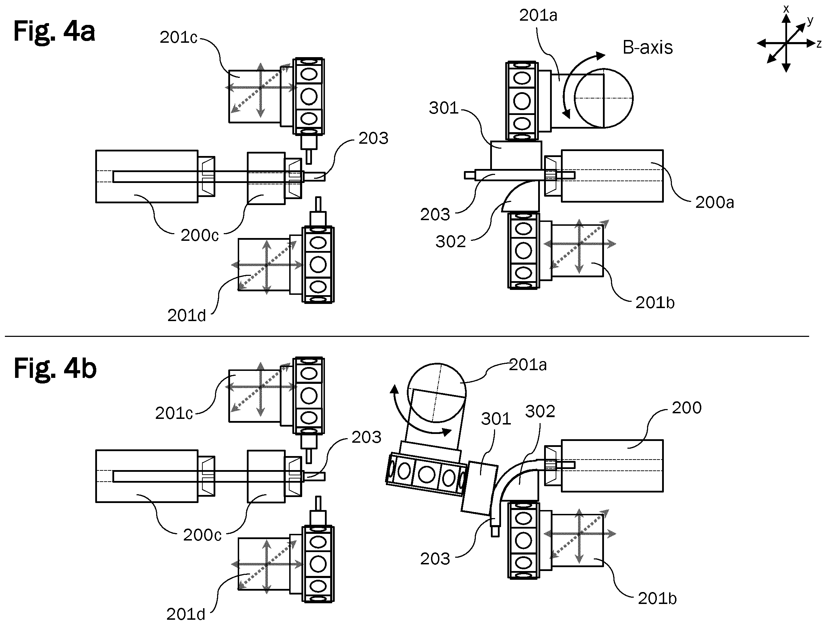

Another embodiment based on a modification of the developments in figures 2a and 2b or figures 3a and 3b is suggested in figure 4a and 4b. Accordingly the machine tool is optimized to work in a swiss type configuration, wherein the workpiece is moved along the z-axis, wherein the workpiece-stock is held by a collet that is recessed behind a guide bush.

In a manufacturing process a first workpiece can therefore be machined by the working unit 201c and/or 201d, while being clamped into the main spindle 200c. At the same time another workpiece can be bent by the first working unit 201a while being clamped into the auxiliary spindle 200a. After processing of the workpiece is complete, said workpiece can be released and another machined workpiece can be received by the auxiliary spindle for the next bending process. Accordingly, a continuous process can be achieved where a workpiece is processed by machining operations when clamped into the main spindle, and after being moved to and clamped into the auxiliary spindle, bending of said workpiece can be performed so that it is possible to perform bending and machining of the workpiece with the same machine tool including autonomous changing the clamping of the workpiece. Moreover, while the bending operation for one workpiece is performed, another workpiece can already be machined.

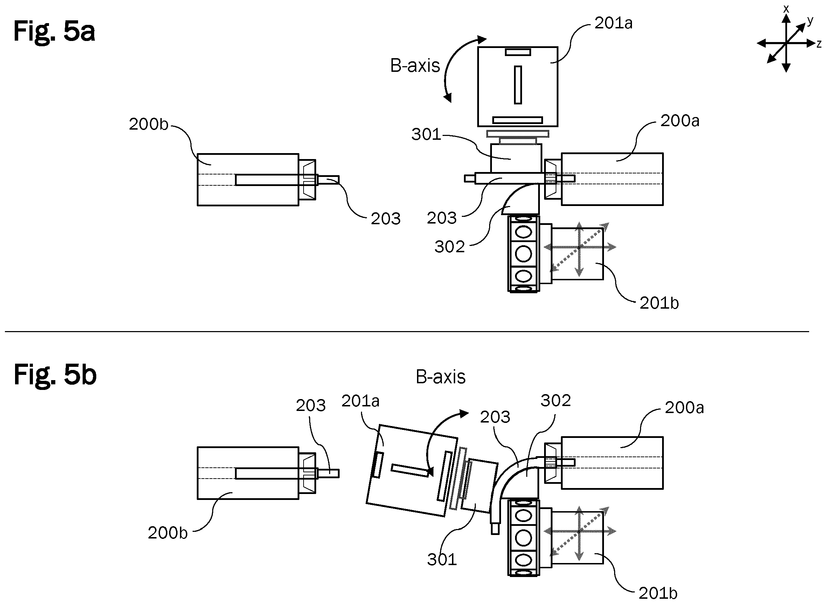

In a further modification shown in Figures 5a and 5b, the the first working unit 201a is a milling head and the pressure die 301 of the bending tool is mounted (or attached) to tool receiving section of the milling head. The workpiece 203 is thereby fixed by the collet system of the first work spindle 200a. For the bending operation the milling head is rotated around the B-axis and moved in the XZ plane. Accordingly, in particular on a lathe with milling units, the turret can be substituted by a fixed support.

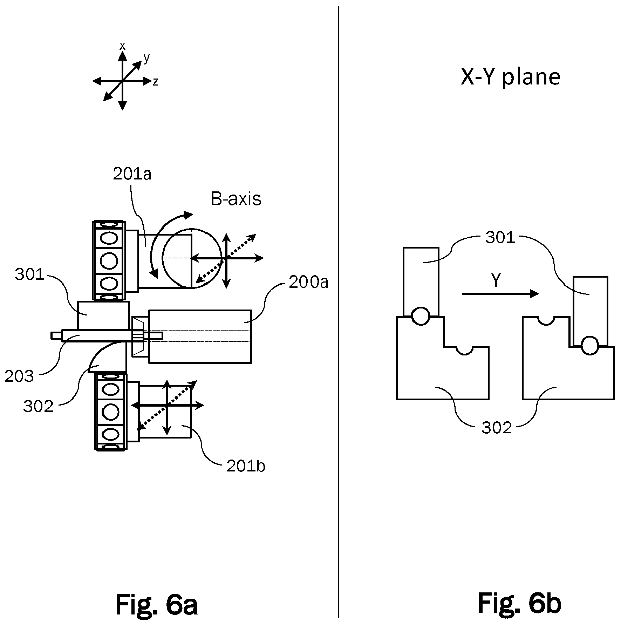

Moreover, the bending tool can be implemented into the configuration of the machine tool 100. The bending tool thereby comprises the pressure die 301 and the bending die 302, wherein both the pressure die 301 and the bending die 302 have at least one guiding path for bending a workpiece, in particular a pipe or tubular workpiece, the bending die 302, in a more preferrable development, has at least two guiding paths with different radii for bending the same workpiece 203 under different angles, as shown in figure 6b (this bending die may be referred to as multi-shape bending die). With an arrangement as shown in e.g. figure 6a, the pressure die 301 can be received in a tool receiving portion of the tool turret 201a. At the same time the multi-shape bending die 302 can be mounted in a tool receiving portion of an adjacent tool turret. For changing the contact surface for a bending operation, the bending die 302 is moved along the Y-axis direction, as shown in figure 6b, for example by moving the tool turret in which the bending die is mounted, accordingly.

Accordingly, a preferrable bending process using the multi-shape bending die 302 mounted in the machine tool allows a bending process with two or more different bending shapes or radii (each having a respective bending die face, i.e. the bending die has a first bending die face and a second bending die face, each face having a different shape such as a different radius). A particular advantage can be achieved when the multi-shape bending die is used for bending a workpiece using the machine tool, such that, after a first bending operation (using the first bending die face) and when it is determined (automatically and therefore for example by using a movable probe of the machine tool) that the shape of the workpiece after the first bending process does not fulfil a predetermined criteria (such as a desired shape or radius) a second bending operation can be performed with the same bending die which is switched such that the second bending die face is used for the bending operation and contacting the workpiece at the time of the bending operation. Accordingly, the same bending tool can be configured to perform different bending operations so that even bending in different planes with different radii is possible because the spindle having the workpiece can be rotated after the first bending operation.

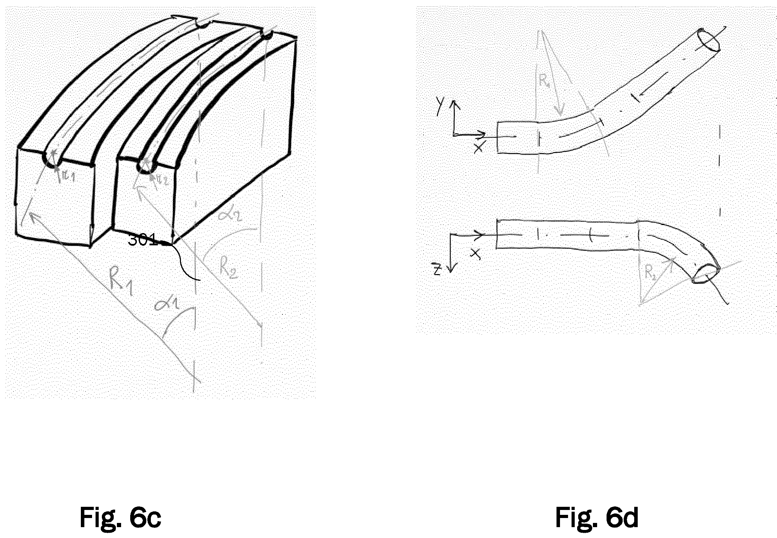

Moreover, in figure 6c a further view of the multi-shape workpiece is shown. As clear from this figure, the bending die has two separate and different bending surfaces (bending die faces having different radius R1 and R2 and different path lengths defined by the path-angles a1 and a2), which are spaced apart in the Y-direction. Preferably one of the bending die faces can be used to correct a shape of a bent workpiece, bent by the other bending die face.

In figure 6d a workpiece is shown which has been bent by using the machine tool, wherein the bending inclination is achieved in different planes. Particularly, by rotating the workpiece held in the work spindle 200a (i.e. rotating the spindle) after a first bending step, in a following bending step a bending inclination in a different plane can be achieved. A highly flexible and efficient manufacturing process can therefore be achieved. Moreover, the flexibility can be even further enhanced, when in such a process also a multi-shape bending die with different shapes is used.

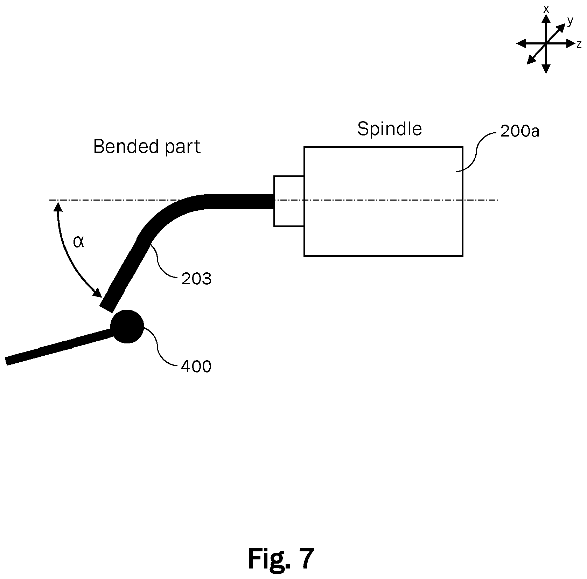

In a further development one or more of the working units can be equipped with a probe 400 for measuring of a geometric parameter of the bent workpiece as shown in Figure 7, in particular for measuring an inclination angle wherein preferably said probe is mounted at one of the working units, and wherein the machine tool includes a control system configured to adjust a bending angle by performing a bending operation in dependence of the measured parameter such as the inclination angle or a radius. Accordingly, the machine tool can automatically measure an inclination or radius of the bended part or workpiece and automatically adjust the shape with bending parameters/program/tools to analyse and/or modify the workpiece with an additional bending operation.

The probe can be a probe configured to be touched by an object to be detected such as a workpiece, and a sensor sensing displacement of the probe and outputting a detection signal when the probe is displaced by the object to be touched can be provided. In particular, a bending inclination of the bent workpiece may be measured.

In one development the probe has a touch surface (touching part) to be touched by the object to be detected, and has a first shaft configured to swing in the touching direction of the object when the object touches the touch surface, and a second shaft connected to the first shaft and configured to be displaced in an axial direction thereof by swing of the first shaft. The sensor is configured to sense displacement of the first and/or second shaft and may output a detection signal. Therefore, measuring geometric tolerances using the machine tool and automatically compensating for spatial errors in the machining area can be achieved. At the same time periodic correction of pitch error, angular error, straightness, bending error etc can be implemented, by using the signal of the probe indicating the displacement or detected error and then correcting the error or displacement by performing an additional manufacturing operation with the machine tool and in particular the working units and work spindle, Therefore, for said bending operations using the probe, also errors caused by wear and interference can also be compensated.

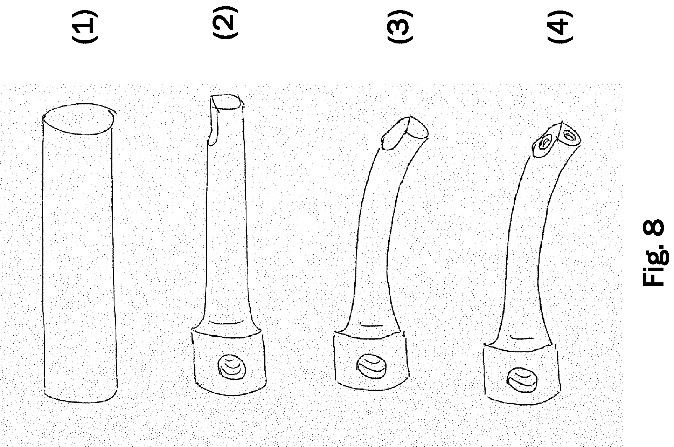

In figure 8 the manufacturing method for a workpiece being manufactured by different manufacturing steps is shown. In step (1) the raw material is shown, which may be the initial shape of the workpiece, which preferably is a cylindrical and/or hollow workpiece. Said workpiece is clamped into the working spindle.

In a first machining step, i.e. step (2) in figure 8, machining of the workpiece clamped into one of the working spindles 200a or 200b can be performed. For example, a diameter or edge of the workpiece is shaped using milling or turning operations of the machine tool, in particular using a tool or a tool turret or milling head.

Afterwards it is possible in a step (3) to bend the workpiece in order to achieve a desired bended shape of the workpiece. For this step the workpiece can remain clamped in the working spindle so that it is not necessary to re-clamp the workpiece after the machining step in order to perform the bending step. Alternatively, the workpiece can be clamped into the opposing working spindle.

Optionally in another step, the workpiece can be machined after the bending step again. As the bending step causes a shift of geometric relations of the e.g. surface elements and shape of the workpiece, it is sometimes necessary to perform final machining steps only on the fully bent workpiece. This can be done, according to the invention, without changing the machine and even without re-clamping the workpiece. It is clear that steps (2) to (4) may also be performed in a different order. Thus, a more efficient way of manufacturing workpieces by applying bending and machining operations using the same machine tool can be achieved.

The description of the above embodiments is illustrative in all respects and is not restrictive. Modifications are possible for those skilled in the art. The scope of the invention is indicated by the claims rather than the above-described embodiments. Furthermore, the scope of the present invention includes modifications from the embodiments within the scope of claims and equivalents.

### Reference list

- 100: machine tool
- 110: machine frame
- 111a-111b: machine stand portion
- 112: spindle support portion
- 113: upper tool carrier support portion
- 114: lower tool carrier support portion
- 150a-150d: (first/second/third/fourth) tool carrier assembly
- 151: carrier support slide
- 152: tool carrier slide
- 200a: first work spindle (auxiliary spindle)
- 200b: second work spindle (main spindle)
- 201: working unit
- 201a-201d: (first/second/third/fourth) working unit
- 203: workpiece
- 301: pressure die
- 302: bending die
- 303: clamping portion
- 400: probe

## Claims

1. Machine tool, in particular a numerically controlled turning or milling machine, comprising
a machine frame (110) having at least one linear movable tool carrier slide (152) configured to carry a working unit;
at least a first work spindle (200) provided to receive a workpiece (203);
a first working unit (201a) mounted onto the at least one tool carrier slide (152);
wherein the first working unit (201a) is configured to be rotatable around a B-axis and the first working unit (201a) is further configured to be movable linearly along a X-Z plane, said X-Z plane being perpendicular to the B-axis; and
the first working unit (201a) has a bending tool and for performing a bending operation the first working unit (201a) is configured to bend the workpiece (203) received by the first work spindle (200) by rotating around the B-axis and/or moving linearly along the X-Z plane.

2. The machine tool according to claim 1, configured for dual operation to perform bending and machining of at least one workpiece (203) fixed in the first work spindle (200) at least successively and preferably in parallel.

3. The machine tool according to claim 1 or 2,
wherein the bending tool includes at least a pressure die (301) mounted on the first working unit (201a) and
wherein preferably the pressure die (301) is mounted at a tool reception portion of the first working unit (201a).

4. The machine tool according to at least one of the preceding claims,
wherein a bending die (302) is connected to the machine frame (110) and/or mounted on a second working unit (201b) of another movable tool carrier slide for additional support during bending of the workpiece (203),
wherein the another movable tool carrier slide is configured to adjust the position of the bending die (302) along its axis.

5. The machine tool according to at least one of the preceding claims,
wherein the machine tool is configured to bend a workpiece (203) with a bending die (302) including one or a plurality of workpiece-receiving profiles spaced along its axis and of different radii about this axis and preferably each workpiece receiving profile has a different guiding path with a different radius for bending the same workpiece under different radii or angles.

6. The machine tool according to at least one of the preceding claims,
wherein for the bending operation the first working unit (201a) is configured to generate a bending force and/or torque to bend the workpiece (203) held in the first work spindle (200) by rotating one working unit (201a) around the B-axis and, preferably at the same time, move said working unit (201a) at least along a Z-axis, the Z-axis being a horizontal axis preferably parallel to the spindle axis of the first work spindle (200).

7. The machine tool according to at least one of the preceding claims,
wherein the first working unit (201a) is a tool turret and the pressure die (301) is mounted at one of a plurality of tool receiving openings of the tool turret; or
wherein the first working unit (201a) is a milling head and the pressure die (301) is mounted at the milling head for providing support to the pressure die (301) during bending of the workpiece;
and preferably the pressure die (301) is configured to grip the workpiece during the bending operation.

8. The machine tool according to at least one of the preceding claims,
wherein the machine tool (100) further comprises
a second work spindle (200b), wherein the first work spindle (200) is a counter spindle and the second work spindle (200b) is a main spindle of the machine tool; and
a third working unit (201c); and
wherein the third working unit (201c) is configured to machine the workpiece (203) received by the main spindle.

9. The machine tool according to at least one of the preceding claims,
wherein the workpiece (203) is clamped by a collet system (303b) of the at least one work spindle (200) to fix the workpiece (203) for the machining and/or bending operation.

10. The machine tool according to at least one of the preceding claims,
wherein a probe (400) for measurement of a geometric parameter of the bent workpiece, in particular for measuring an inclination angle, is provided, wherein preferably said probe is mounted at one of the working units (201a-201d), and
wherein the machine tool includes a control system configured to adjust a bending angle by performing a bending operation in dependence of the measured parameter such as the inclination angle or a radius.

11. The machine tool according to at least one of the preceding claims,
wherein the bending die (302) and/or pressure die (301) has at least two different pipe-receiving profiles for bending the same workpiece with different curvatures.

12. A method for bending and machining a workpiece (203) using the same machine tool (100) comprising at least one of the following steps:
receiving the workpiece (203) by at least one work spindle (200) of the machine tool (100),
machining the workpiece (203) received by the work spindle (200) by the working unit (201) which is mounted onto the linear movable tool carrier slide, wherein machining includes at least one of drilling, milling, grinding, or turning;
bending the workpiece (203) by applying a bending pressure from the first working unit (201) onto the workpiece (203).

13. The method for bending and machining a workpiece according to claim 12, comprising:
machining the workpiece (203) received by a second work spindle (200b) by the second or third working unit (201c), and
transferring the workpiece from the second work spindle (200b) to the first work spindle (200) before the bending of the workpiece, and/or
additional machining of the workpiece (203) by the first working unit (201a) after bending of the workpiece (203).

14. The method for bending and machining a workpiece according to claim 12, comprising:
measuring one or more parameters, in particular an inclination or a radius, of the workpiece after bending the workpiece, and
performing an additional bending operation on the workpiece (203) based on the measured one or more parameters.

15. A bending tool for bending a workpiece on a machine tool according to claim 1, the bending tool comprising:
a bending die (302) and a pressure die (301);
wherein both the pressure die (301) and the bending die (302) have at least one guiding path for bending of a workpiece (203), in particular a pipe or tubular workpiece;
the bending die (302) has at least two guiding paths with different radii for bending the same workpiece under different radii and angles;
and/or wherein the pressure die (301) is configured as a follower-type pressure die, configured to travel along the workpiece (203) during the bending operation to reduce drag on the workpiece at the point of bend.
